(19) Europäisches Patentamt
European Patent Office
Office européen des brevets

(11) **EP 3 448 929 B1**

(12) **EUROPEAN PATENT SPECIFICATION**

(45) Date of publication and mention
of the grant of the patent:
**26.07.2023 Bulletin 2023/30**

(21) Application number: **16899844.1**

(22) Date of filing: **29.04.2016**

(51) International Patent Classification (IPC):
**C09D 5/00** *(2006.01)*    **C09D 5/03** *(2006.01)*
**C09D 133/14** *(2006.01)*    **C09D 133/22** *(2006.01)*
**C08F 220/14** *(2006.01)*    **C08L 33/00** *(2006.01)*
**C08L 21/00** *(2006.01)*

(52) Cooperative Patent Classification (CPC):
(C-Sets available)
**C08F 220/14; C08L 21/00; C08L 33/00;**
**C09D 5/002; C09D 5/033; C09D 133/14;**
**C09D 133/22;** C08K 2201/005     (Cont.)

(86) International application number:
**PCT/CN2016/080684**

(87) International publication number:
**WO 2017/185332 (02.11.2017 Gazette 2017/44)**

(54) **MULTILAYER COATING AND PROCESS OF PREPARING THE MULTILAYER COATING**

MEHRLAGIGE BESCHICHTUNG UND VERFAHREN ZUR HERSTELLUNG DER MEHRLAGIGEN BESCHICHTUNG

REVÊTEMENT MULTICOUCHE ET PROCÉDÉ DE PRÉPARATION DU REVÊTEMENT MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2019 Bulletin 2019/10**

(73) Proprietor: **Dow Global Technologies, LLC**
**Midland, MI 48674 (US)**

(72) Inventors:
 • **LI, Jian**
 **Shanghai 201203 (CN)**
 • **ZHANG, Liang**
 **Shanghai 201203 (CN)**
 • **LI, Wei**
 **Shanghai 201203 (CN)**
 • **RAVISANKER, Loganathan**
 **Shanghai 201203 (CN)**

(74) Representative: **Beck Greener LLP**
**Fulwood House**
**12 Fulwood Place**
**London WC1V 6HR (GB)**

(56) References cited:
 EP-A1- 1 227 116    WO-A1-2015/051526
 WO-A1-2015/051526    WO-A1-2015/058344
 CN-A- 1 243 137    CN-A- 1 243 137
 CN-A- 101 845 785    CN-A- 102 093 804
 CN-A- 102 733 289    JP-A- S5 397 234
 KR-B1- 101 449 677    US-A- 2 961 029
 US-A- 4 897 313    US-A1- 2013 040 149
 US-B1- 8 772 388

 • HEMPEL SA: "STRATA SPORTS GROUND MARKING 591ME product data sheet ( download)", , 1 January 2016 (2016-01-01), pages 1-2, XP002794491, Retrieved from the Internet: URL:https://www.hempel.sa/en-SA/products/strata-sports-ground-marking-591me [retrieved on 2019-09-23]

- **Melos: "Melos InnII EPDM ST", , 9 September 2013 (2013-09-09), XP055716799, Retrieved from the Internet: URL:www.melos-gmbh.com [retrieved on 2020-07-21]**

(52) Cooperative Patent Classification (CPC): (Cont.)

C-Sets
**C08F 220/14, C08F 220/1804, C08F 220/36, C08F 220/06;
C08L 33/00, C08K 3/36, C08K 5/098, C08K 5/29, C08L 21/00, C08L 33/00;
C08L 33/00, C08K 3/36, C08K 5/098, C08K 5/5435, C08L 21/00, C08L 33/00;
C08L 33/00, C08K 3/36, C08K 5/29, C08K 5/42, C08L 21/00, C08L 33/00;
C08L 33/00, C08K 5/0025, C08K 5/098, C08L 21/00, C08L 33/00;
C08L 33/00, C08K 5/098, C08K 5/29, C08L 21/00, C08L 33/00;
C08L 33/00, C08K 5/098, C08K 5/42, C08L 21/00, C08L 33/00;
C08L 33/00, C08K 5/098, C08K 5/5435, C08L 21/00, C08L 33/00;
C08L 33/00, C08K 5/29, C08K 5/42, C08L 21/00, C08L 33/00;
C08L 33/00, C08K 5/42, C08K 5/5435, C08L 21/00, C08L 33/00;
C09D 133/14, C08L 33/22, C08L 21/00, C08K 3/36;
C09D 133/22, C08L 33/14;
C09D 133/22, C08L 33/14, C08L 21/00, C08K 3/36;**
C08F 220/1804, C08F 220/44, C08F 220/56, C08F 220/06

**Description**

FIELD OF THE INVENTION

The present invention relates to a multilayer coating and a method of preparing the multilayer coating.

INTRODUCTION

Synthetic surfaces for sports courts, especially for outdoor, such as basketball courts, volleyball courts, badminton courts and tennis courts, etc., are typically made from a polymer mixture of rubber and binder systems in order to achieve appropriate elasticity, good slip resistance, shock absorption and injury reduction.

Synthetic surfaces for sports courts made from conventional polyurethane (PU) binders or silicone modified polyurethane (SPU) binders are dominant in the market due to their satisfactory flexibility, wear-resistance, anti-slip property, and easy maintenance. Due to the presence of the conventional PU or SPU binders, which usually comprise toluene diisocyanate (TDI) or methylene diphenyl diisocyanate, organic solvents, and/or heavy metal-containing catalysts, the synthetic surfaces for sports courts have toxicity concerns. Also, the synthetic surfaces for sports courts comprising conventional elastic layers with solvent-borne PU/SPU materials during applications are susceptible to cracking over the time under the condition of high humidity and direct sunlight.

To address the above mentioned problems, acrylic latex binders have been used to replace PU/SPU binders in the conventional elastic layers for tennis court surfaces. However, acrylic latex binders are not widely used in other sports court surfaces due to tedious applications of acrylic based elastic layers. The acrylic based elastic layers have to be applied in multiple layers over a long period of time, and each layer takes a long time to dry. Also, conventional application of acrylic based court surface appears to have a poor elasticity. Insufficient elasticity gives rise to a shorter service life of acrylic based sports court surface.

Therefore, it is desirable to provide a novel synthetic surface sports court that is made from acrylic latex binder that provides acceptable drying speed during application and sufficient tensile strength and tensile elongation to meet standard requirements such as the GB/T 19851.11-2005 standard. This novel multilayer coating can be used for various sports courts, especially for outdoor, such as basketball courts, volleyball courts, badminton courts and tennis courts, etc. WO 2015/051526 relates to a polymer mixture having a fast drying time, a multilayer article comprising at least two layers of the dried polymer mixture and having good mechanical properties, water resistance and weatherability, and a method of preparing the multilayer article.

SUMMARY OF THE INVENTION

The present invention provides a novel multilayer coating as defined according to the claims. The elastic layer formed from a polymer mixture with a thickness of less than 3.5 millimeter (mm) dries at room temperature (20-25°C) at an acceptable drying speed, that is, the obtained layer being walkable after applying the polymer mixture to a substrate for 24 hours. The multilayer coating shows sufficient tensile strength and tensile elongation to meet the requirements of the GB/T 19851.11-2005 standard: Sports equipment and playground for middle school and primary school - Part 11: Synthetic surfaced athletic ground (item 4.6, page 2). The GB/T 19851.11-2005 standard herein is a national standard published by General Administration of Quality Supervision, Inspection and Quarantine of the People's Republic of China (P. R. China) and Standardization Administration of the P. R. China, issued on August 26, 2005, and put into effect on October 1, 2005. The process of preparing the multilayer coating of the present invention is free of troublesome smell and no fire risks during construction as compared to solvent based polyurethane binders. The obtained multilayer coating has substantially no volatile organic residues.

In a first aspect, the present invention is a multilayer coating comprising:

(i) a primer coat layer comprising an aqueous primer composition comprising a styrene-acrylic emulsion (co)polymer;
(ii) a base layer comprising a polymer mixture comprising an aqueous binder composition and vulcanized or crosslinked rubber, wherein the aqueous binder composition comprises:

a first acrylic emulsion (co)polymer having a glass transition temperature of - 5°C or less determined according to the method described herein;
a second acrylic emulsion (co)polymer having a glass transition temperature of at least 15°C determined according to the method described herein;
a crosslinking agent comprising a water-dispersible isocyanate composition;
a foaming agent;

wherein the vulcanized or crosslinked rubber comprises rubber particles having a sieve particle size of 0.5 to 6 mm; and the weight ratio of the total solids weight of the acrylic emulsion (co)polymer to the total weight of the vulcanized or crosslinked rubber is from 1:4 to 1:0.2;

(iii) one or more elastic layer comprising a polymer mixture comprising an aqueous binder composition and vulcanized or crosslinked rubber, wherein the aqueous binder composition comprises:

a first acrylic emulsion (co)polymer having a glass transition temperature of - 5°C or less determined according to the method described herein;
a second acrylic emulsion (co)polymer having a glass transition temperature of at least 15°C determined according to the method described herein;
a crosslinking agent comprising a water-dispersible isocyanate composition;
a foaming agent;

wherein the vulcanized or crosslinked rubber comprises rubber powder having a sieve particle size less than 0.5 mm; and the weight ratio of the total solids weight of the acrylic emulsion (co)polymers to the total weight of the vulcanized or crosslinked rubber is from 1: 1.5 to 1:0.2; and

(iv) a top coat layer comprising an aqueous top coating composition comprising an acrylic emulsion (co)polymer.

In a second aspect, the present invention is a method of preparing the multilayer coating of the first aspect. The method comprises:

(1) providing an aqueous primer composition comprising a styrene-acrylic emulsion (co)polymer;
(2) applying the aqueous primer composition to a substrate;
(3) drying and curing the aqueous primer composition to form a primer coat layer;

(3a) providing a polymer mixture comprising an aqueous binder composition and vulcanized or crosslinked rubber, wherein the aqueous binder composition comprises:

a first acrylic emulsion (co)polymer having a glass transition temperature of -5°C or less;
a second acrylic emulsion (co)polymer having a glass transition temperature of at least 15°C;
a crosslinking agent comprising a water-dispersible isocyanate composition;
a foaming agent;
wherein the vulcanized or crosslinked rubber comprises rubber particles having a sieve particle size of 0.5 to 6 mm; and the weight ratio of the total solids weight of the acrylic emulsion (co)polymer in the aqueous binder composition to the total weight of the vulcanized or crosslinked rubber is from 1:4 to 1:0.2;

(3b) applying the polymer mixture to the primer coat layer to form a base layer, such that the primer coat layer resides between the substrate and the base layer;

(4) providing a polymer mixture comprising an aqueous binder composition and vulcanized or crosslinked rubber, wherein the aqueous binder composition comprises:

a first acrylic emulsion (co)polymer having a glass transition temperature of -5°C or less determined according to the method described herein;
a second acrylic emulsion (co)polymer having a glass transition temperature of at least 15°C determined according to the method described herein;
a crosslinking agent comprising a water-dispersible isocyanate composition;
a foaming agent;
wherein the vulcanized or crosslinked rubber comprises rubber powder having a sieve particle size less than 0.5 mm; and the weight ratio of the total solids weight of the acrylic emulsion (co)polymer to the total weight of the vulcanized or crosslinked rubber is from 1:1.5 to 1:0.2;

(5) applying the polymer mixture to the base layer;
(6) drying and curing the polymer mixture to form an elastic layer, such that the base layer resides between the primer coat layer and the elastic layer;
(7) providing an aqueous top coating composition comprising an acrylic emulsion (co)polymer;
(8) applying the aqueous top coating composition to the elastic layer; and
(9) drying and curing the aqueous top coating composition to form a top coat layer, such that the elastic layer resides between the base layer and the top coat layer

BRIEF DESCRIPTION OF THE DRAWINGS

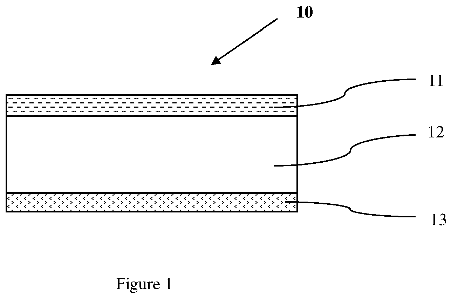

Figure 1 is a schematic illustration of a cross section of one embodiment of the present invention.

DETAILED DESCRIPTION OF THE INVENTION

The term "aqueous" herein means water or a water mixture comprising 50 weight percentage (wt%) or less of water-miscible, solvent, based on the weight of the mixture. The term "acrylic" herein refers to (meth)acrylic acid, (meth)alkyl acrylate, (meth)acrylamide, (meth)acrylonitrile and modified forms thereof, for example, (meth)hydroxyalkyl acrylate. The term "(meth)acrylic" refers to any of acrylic, methacrylic, and mixtures thereof.
The multilayer coating of the present invention comprises

(i) a primer coat layer comprising an aqueous primer composition comprising a styrene-acrylic emulsion (co)polymer;
(ii) a base layer comprising a polymer mixture comprising an aqueous binder composition and vulcanized or crosslinked rubber, wherein the aqueous binder composition comprises:

a first acrylic emulsion (co)polymer having a glass transition temperature of -5°C or less determined according to the method described herein;
a second acrylic emulsion (co)polymer having a glass transition temperature of at least 15°C determined according to the method described herein;
a crosslinking agent comprising a water-dispersible isocyanate composition;
a foaming agent;

wherein the vulcanized or crosslinked rubber comprises rubber particles having a sieve particle size of 0.5 to 6 mm; and the weight ratio of the total solids weight of the acrylic emulsion (co)polymer to the total weight of the vulcanized or crosslinked rubber is from 1:4 to 1:0.2;
(iii) one or more elastic layer comprising a polymer mixture comprising an aqueous binder composition and vulcanized or crosslinked rubber, wherein the aqueous binder composition comprises:

a first acrylic emulsion (co)polymer having a glass transition temperature of -5°C or less determined according to the method described herein;
a second acrylic emulsion (co)polymer having a glass transition temperature of at least 15°C determined according to the method described herein;
a crosslinking agent comprising a water-dispersible isocyanate composition; and
a foaming agent; and
wherein the vulcanized or crosslinked rubber comprises rubber powder having a sieve particle size less than 0.5 mm; and the weight ratio of the total solids weight of the acrylic emulsion (co)polymer to the total weight of the vulcanized or crosslinked rubber is from 1:1.5 to 1:0.2; and

(iv) a top coat layer made from an aqueous top coating composition comprising an acrylic emulsion (co)polymer.

The thickness of the primer coat layer is generally 50 microns or more, 75 microns or more, or even 100 microns or more, and at the same time is generally 500 microns or less, 400 microns or less, 300 microns or less. The thickness of each elastic layer is generally 0.5 mm or more, 1.0 mm or more, or even 1.5 mm or more, and at the same time is generally 3.5 mm or less, 2.5mm or less, or even 2 mm or less. The total thickness of the elastic layers is generally 0.5 mm or more, 1 mm or more, or even 1.5 mm or more, and at the same time is generally 8 mm or less, 5 mm or less, or even 4 mm or less. The thickness of the top coat layer is generally 50 microns or more, 100 microns or more, or 200 microns or more, and at the same time is generally 1000 microns or less, 800 microns or less, or even 600 microns or less.
The primer coat layer resides between a substrate and the elastic layer. The primer coat layer may further improve the adhesion of the multilayer coating to a substrate. The primer coat layer may be made from an aqueous primer composition. The aqueous primer composition useful in the present invention comprises a styrene-acrylic emulsion (co)polymer. A commercially available example of such an emulsion is PRIMAL™ AS-8152N available from The Dow Chemical Company (PRIMAL is a trademark of The Dow Chemical Company). The amount of the styrene-acrylic emulsion (co)polymer in the aqueous primer composition may be, by solids based on the total solids weight of the aqueous primer composition, in an amount of 20 wt% or more, 30 wt% or more, or even 40 wt% or more, and at the same time, 95 wt% or less, 85 wt% or less, or even 75% or less.

The aqueous primer composition useful in the present invention may further comprise water. The concentration of water may be, based on the total weight of the aqueous primer composition, in an amount of 5 wt% or more, 15 wt% or more, or even 25 wt% or more, and at the same time, 80 wt% or less, 70 wt% or less, or even 60% or less.

In addition to the components described above, the aqueous primer composition useful in the present invention may further comprise any one or combination of conventional additives such as coalescing agents, cosolvents, surfactants, buffers, neutralizers, thickeners, non-thickening rheology modifiers, dispersants, mildewcides, biocides, plasticizers, antifoaming agents, defoaming agents, anti-skinning agents, colorants, flowing agents, and crosslinkers.

The multilayer coating of the present invention comprises one or more elastic layer. The elastic layer resides between the top coat layer and the primer coat layer. The elastic layer is made from a dried polymer mixture.

The polymer mixture useful in the present invention comprises an aqueous binder composition and vulcanized or crosslinked rubber. The aqueous binder composition useful in the present invention comprise: (a) a first acrylic emulsion (co)polymer having a $T_g$ of -5°C or less, (b) a second acrylic emulsion (co)polymer having a $T_g$ of at least 15°C. The $T_g$ values of acrylic emulsion (co)polymers used herein are those calculated by using the Fox equation (T.G. Fox, Bulletin of the American Physical Society, Volume 1, Issue No. 3, page 123 (1956)). For example, for calculating the $T_g$ of a copolymer of monomers $M_1$ and $M_2$,

$$\frac{1}{T_g(calc.)} = \frac{w(M_1)}{T_g(M_1)} + \frac{w(M_2)}{T_g(M_2)},$$

wherein $T_g(calc.)$ is the glass transition temperature calculated for the copolymer, $w(M_1)$ is the weight fraction of monomer $M_1$ in the copolymer, $w(M_2)$ is the weight fraction of monomer $M_2$ in the copolymer, $T_g(M_1)$ is the glass transition temperature of the homopolymer of $M_1$, and $T_g(M_2)$ is the glass transition temperature of the homopolymer of $M_2$, all temperatures being in K. The glass transition temperatures of monomers may be found, for example, in "Polymer Handbook", Fourth edition edited by J. Brandrup, E.H. Immergut, and E.A. Grulke, Interscience Publishers, 1999.

The first and/or second acrylic emulsion (co)polymer useful in the present invention may comprise one or more copolymerized ethylenically unsaturated nonionic monomers. "Nonionic monomers" herein refer to polymerizable monomers that do not bear an ionic charge between pH=1-14. Examples of suitable ethylenically unsaturated nonionic monomers include (meth)acrylic ester monomers such as methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, 1,3-butanediol dimethacrylate, and hydroxypropyl methacrylate; acrylamide; (meth)acrylonitrile; styrene and substituted styrene; or mixtures thereof. The ethylenically unsaturated nonionic monomers preferably comprise (meth)acrylic ester monomers, or their combination with styrene. In a preferred embodiment, the ethylenically unsaturated nonionic monomers comprise only (meth)acrylic ester monomers. The first acrylic emulsion (co)polymer useful in the present invention may comprise, based on the solids weight of the first acrylic emulsion (co)polymer, 70 weight percent (wt%) or more of the copolymerized nonionic monomer, 75 wt% or more, or even 80 wt% or more, and at the same time, 99.5 wt% or less, 95 wt% or less, or even 90 wt% or less. The second acrylic emulsion (co)polymer useful in the present invention may comprise, based on the solids weight of the second acrylic emulsion (co)polymer, 70 weight percent (wt%) or more of the copolymerized nonionic monomer, 75 wt% or more, or even 80 wt% or more, and at the same time, 99.5 wt% or less, 95 wt% or less, or even 90 wt% or less.

The first and/or second acrylic emulsion (co)polymer useful in the present invention may also comprise one or more copolymerized ethylenically unsaturated monomers having one or more functional groups. The functional groups may be selected from carbonyl, acetoacetate, alkoxysilane, carboxyl, ureido, amide, imide, amino group, or mixtures thereof. Preferably, an ethylenically unsaturated monomer bearing a carbonyl group such as diacetone acrylamide is used. Examples of suitable functional-group-containing ethylenically unsaturated monomers include ethylenically unsaturated carboxylic or dicarboxylic acids such as acrylic or methacrylic acid, itaconic acid, and maleic acid; amides, and preferably N-alkylolamides or hydroxyalkyl esters of the above-mentioned carboxylic acids, such as acrylamide, methacrylamide, N-methylolacrylamide, N-methylolmethacrylamide, 2-hydroxyethylacrylamide, 2-hydroxyethylmethacrylamide, hydroxyethyl acrylate, hydroxy ethyl methacrylate, hydroxypropyl acrylate and hydroxypropyl methacrylate; or mixtures thereof.

The first acrylic emulsion (co)polymer useful in the present invention may comprise, based on the solids weight of the first acrylic emulsion (co)polymer, 0.01 wt% or more of the copolymerized functional-group-containing ethylenically unsaturated monomer, 0.05 wt% or more, or even 0.1 wt% or more, and at the same time, 20 wt% or less, 10 wt% or less, or even 5 wt% or less. The second acrylic emulsion (co)polymer useful in the present invention may comprise, based on the solids weight of the second acrylic emulsion (co)polymer, 0.01 wt% or more of the copolymerized functional-group-containing ethylenically unsaturated monomer, 0.05 wt% or more, or even 0.1 wt% or more, and at the same time, 20 wt% or less, 10 wt% or less, or even 5 wt% or less.

In a preferred embodiment, the first and second emulsion acrylic (co)polymers each comprises, based on the solids weight of the first or second acrylic emulsion (co)polymer respectively, from 70 to 99.5 wt% of the copolymerized ethylenically unsaturated nonionic monomer described above, and from 0.5 to 10 wt% of the copolymerized ethylenically unsaturated monomers having one or more functional groups described above.

The emulsion (co)polymer useful in the present invention may be prepared by polymerization techniques well known in the art such as suspension polymerization or emulsion polymerization of the monomers described above. Emulsion polymerization is a preferred process. Emulsion polymerization techniques for preparing the aqueous dispersion of the acrylic emulsion (co)polymer particles are well known in the polymer arts, and include multiple stage polymerization processes. For each monomer, the concentration of the monomer based on the total weight of monomers used in preparing the aqueous dispersion of the acrylic (co)polymer is substantially the same as the concentration of copolymerized such monomer based on the solids weight of the acrylic (co)polymer.

The aqueous dispersion of the acrylic (co)polymer may be prepared by emulsion polymerization from the monomers described above in the presence of a surfactant. The surfactants preferably bear an allyl group. Suitable commercially available surfactants include, for example, TREM™ LF-40 surfactant based on sodium alkyl allyl sulfosuccinate available from Cognis, ADEKA™ Resoap SR-10 reactive anionic emulsifier available from Adeka, DEXTROL™ OC-1525 surfactant based on ammonium phosphate ester nonyl phenol ethoxylate available from Dexter, LATEMUL™ PD-104 anionic polymerizable surfactant available from Kao Chemicals, HITENOL™ KH-10 anionic polymerizable surfactant available from Dai-ichi Kogyo Seiyaku Co. Ltd, or mixtures thereof. The amount of the surfactant used is usually 0.01 wt% or more, 0.3 wt% or more, or even 0.5 wt% or more, and at the same time, 10 wt% or less, 5 wt% or less, or even 2 wt% or less, based on the total weight of monomers.

The emulsion polymerization process may be conducted in the presence of a chain transfer agent. Examples of suitable chain transfer agents include 3-mercaptopropionic acid, dodecyl mercaptan, methyl 3-mercaptopropionate, benzenethiol, azelaic alkyl mercaptan, or mixtures thereof. The train transfer agent may be used in an effective amount to control the molecular weight of the obtained acrylic emulsion polymer. For example, the concentration of the chain transfer agent may be 0.01 wt% or more, 0.05 wt% or more, or even 0.1 wt% or more, and at the same time, 5 wt% or less, 3 wt% or less, or even 2 wt% or less, based on the total weight of monomers. In addition, free radical initiators may be used in the emulsion polymerization process.

The first and/or second acrylic emulsion (co)polymer useful in the present invention may be in the form of an emulsion. The emulsion may have solids 30 wt% or more, 35 wt% or more, or even 40 wt% or more, and at the same time, 70 wt% or less, 68 wt% or less, or even 65 wt% less, based on the total weight of the emulsion.

The first acrylic emulsion (co)polymer useful in the present invention may have a $T_g$ of -5°C or lower, -6°C or lower, -8°C or lower, or even -10°C or lower, and at the same time, -50°C or higher, -45°C or higher, or even -40°C or higher. Suitable commercially available first acrylic emulsion (co)polymer emulsions include, for example, ELASTENE™ 2848NG and RHOPLEX™ EC-2540 acrylic emulsions both available from The Dow Chemical Company (ELASTENE and RHOPLEX are trademarks of The Dow Chemical Company); or mixtures thereof.

The concentration of the first acrylic emulsion (co)polymer in the aqueous binder composition may be, by solids based on the total solids weight of the acrylic emulsion (co)polymers in the aqueous binder composition, 5 wt% or more, 10 wt% or more, 15 wt% or more, or even 20 wt% or more, and at the same time, 95 wt% or less, 90 wt% or less, or even 80 wt% or less.

The second acrylic emulsion (co)polymer may have a $T_g$ of at least 15°C, 18°C or higher, or even 20°C or higher, and at the same time, 60°C or less, 50°C or less, or even 40°C or less. Suitable commercially available second acrylic emulsion (co)polymer emulsions include, for example, PRIMAL™ AC 261 P and PRIMAL™ TX-100 acrylic emulsions both available from The Dow Chemical Company; or mixtures thereof.

The concentration of the second acrylic emulsion (co)polymer in the aqueous binder composition may be, by solids based on the total solids weight of acrylic emulsion (co)polymers in the aqueous binder composition, 5 wt% or more, 10 wt% or more, 15 wt% or more, or even 20 wt% or more, and at the same time, 95 wt% or less, 90 wt% or less, or even 80 wt% or less.

Total amounts of acrylic emulsion (co)polymers in the aqueous binder composition may be, by solids based on the total solids weight of the aqueous binder composition, in an amount of 20 wt% or more, 30 wt% or more, or even 40 wt% or more, and at the same time, 70 wt% or less, 65 wt% or less, or even 60 wt% or less.

The aqueous binder composition useful in the present invention further comprises a crosslinking agent. "Crosslinking agent" herein refers to a compound that has two or more reactive groups and that is capable of reacting with reactive groups attached to polymer chains to form crosslinks between polymer chains. The reactive groups on the crosslinking agent may be the same as or different from the reactive groups attached to the polymer chains.

The crosslinking agent useful in the present invention comprises a water-dispersible isocyanate composition. The water-dispersible isocyanate composition useful in the present invention may comprise an isocyanate compound and a modified isocyanate compound comprising at least one anionic group, at least one polyethylene oxide segment, or both an anionic group and a polyethylene oxide segment. In some embodiments, the water-dispersible isocyanate composition comprises the isocyanate compound, a modified isocyanate compound comprising the anionic group, and a modified compound comprising the polyethylene oxide segment. As used herein, an anionic group is a chemical group that carries negative charge. The negative charge may be -1, -2, or -3. A compound with an anionic group is associated with one or more cations. The associated cation may be a metal cation or an organic compound with a cationic group, a group having a positive charge of +1, +2, or +3. When a compound with an anionic group is in solid form or is in a nonpolar environment, the associated cation(s) is located adjacent to the anionic group. When such a compound is dissolved or dispersed in water, the anionic group and the associated cation(s) may be separated. Preferred anionic group is sulphonate, carboxylate, carboxylic acid group, phosphonate, or a mixture thereof. Suitable commercially available water-dispersible isocyanate compositions include, for example, BAYHYDUR™ XP2655 hydrophilic aliphatic polyisocyanate based on hexamethylene diisocyanate available from Bayer Material Science AG.

The concentration of the isocyanate compound in the water-dispersible isocyanate composition may be, based on total solids weight of the water-dispersible isocyanate composition, 1 wt% or more, 20 wt% or more, or even 50 wt% or more, and at the same time, 95 wt% or less, 90 wt% or less, or even 80 wt% or less.

The crosslinking agent in the aqueous binder composition further comprises one or more epoxy silanes. Surprisingly, the combination of the epoxy silane and the water-dispersible isocyanate composition can further improve the water resistance property of the resultant cured polymer mixture. An epoxy silane means a functional silane having at least one epoxy group. Examples of suitable epoxy silanes include 3-glycidoxypropyltrimethoxysilane; 3-glycidoxypropylmethyldiethoxysilane; 3-glycidoxypropyltriethoxysilane; beta-(3,4-epoxycyclohexyl)ethyltriethoxysilane; or mixtures thereof. Suitable commercially available epoxy silanes include, for example, SILQUEST™ A-187, SILQUEST™ WetLink 78, SILQUEST™ A-186, and COATOSIL™ 2287 epoxy silanes all available from Momentive Performance Materials; or mixtures thereof. When the epoxy silane is used, the weight ratio of the water-dispersible isocyanate composition to the epoxy silane may be 0.1:1 or more, 0.5:1 or more, or even 1.5:1 or more; and at the same time, 10:1 or less, 5:1 or less, or even 2.5:1 or less.

The concentration of total crosslinking agents in the aqueous binder composition may be, based on the total solids weight of the acrylic emulsion (co)polymer, 2 wt% or more, 4 wt% or more, or even 6 wt% or more, and at the same time, 40 wt% or less, 30 wt% or less, or even 16 wt% or less.

The aqueous binder composition useful in the present invention further comprises one or more foaming agents. "Foaming agent" herein refers to a compound that can generate air voids inside materials to form porous structure. Examples of suitable foaming agents include fatty acid salts such as sodium oleate, alkylsulfonate such as sodium alkylsulfonate and sodium alkylbenzenesulfonate, alkyl polyglycoside or mixtures thereof. The concentration of the foaming agent may be, 0.02 wt% or more, 2.0 wt% or more, or even 3.0 wt% or more, and at the same time, 10.0 wt% or less, 9.0 wt% or less, or even 8.0 wt% or less, based on the total solids weight of the aqueous binder composition.

The aqueous binder composition useful in the present invention may further comprise a silicone dispersion. The concentration of the silicone dispersion may be, by solids based on the total solids weight of the aqueous binder composition, 0 wt% or more, 0.2 wt% or more, or even 0.5 wt% or more, and at the same time, 5.0 wt% or less, 3.0 wt% or less, or even 2.0 wt% or less.

The aqueous binder composition useful in the present invention may further comprise one or more rheology modifiers. The rheology modifiers may be polyvinyl alcohol, clay materials, acid derivatives, acid copolymers, urethane associate thickeners (UAT), polyether urea polyurethanes (PEUPU), polyether polyurethanes (PEPU), or mixtures thereof. Examples of suitable rheology modifiers include alkali swellable emulsions (ASE) such as sodium or ammonium neutralized acrylic acid polymers; hydrophobically modified alkali swellable emulsions (HASE) such as hydrophobically modified acrylic acid copolymers; associative rheology modifiers such as hydrophobically modified ethoxylated urethanes (HEUR); and cellulosic rheology modifiers such as methyl cellulose ethers, hydroxymethyl cellulose (HMC), hydroxyethyl cellulose (HEC), hydroxypropyl methyl cellulose (HPMC), hydroxyethyl methyl cellulose (HEMC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferably, the rheology modifier is based on HEUR, HEMC or HEC, for example, ACRYSOL™ RM-12W nonionic rheology modifier, WALOCEL™ MT 400 PFV and CELLOSIZE™ QP 300 available from The Dow Chemical Company (ACRYSOL, WALOCEL and CELLOSIZE are trademarks of The Dow Chemical Company). When presented, the concentration of the rheology modifier may be, based on the total solids weight of the aqueous binder composition, 0.001 wt% or more, 0.002 wt% or more, or even 0.005 wt% or more, and at the same time, 3.0 wt% or less, 2.0 wt% or less, or even 0.3 wt% or less.

In addition to the components described above, the aqueous binder composition useful in the present invention may further comprise any one or combination of the following additives: inorganic extenders, pigments, fillers, buffers, neutralizers, dispersants, humectants, mildewcides, biocides, anti-skinning agents, colorants, flowing agents, anti-oxidants, plasticizers, leveling agents, dispersants, adhesion promoters, and diluents. When present, these additives may be in an amount of 0.001 wt% or more, preferably 0.01 or more, and at the same time, 20 wt% or less, preferably 4 wt% or less, based on the total solids weight of the aqueous binder composition.

The polymer mixture useful in the present invention further comprises vulcanized or crosslinked rubber. Examples of suitable vulcanized or crosslinked rubber useful in the present invention comprise styrene butadiene rubber (SBR), ethylene-propylene-diene monomer (EPDM) rubber, ethylene propylene rubber, butadiene rubber, natural rubber, styrene butadiene copolymer, hydrogenated nitrile, nitrile rubber, neoprene, polychloroprene , or mixtures thereof. Preferably, EPDM rubber is used.

The vulcanized or crosslinked rubber in the polymer mixture comprises rubber powder having a sieve particle size less than 0.5 mm, less than 0.3 mm, less than 0.1 mm, or even less than 0.05 mm. The weight ratio of total solids weight of acrylic emulsion (co)polymers to the total weight of the vulcanized or crosslinked rubber in the polymer mixture useful in the present invention may be from 1:1.5 to 1:0.2. The weight ratio may be 1:0.5 or lower, preferably 1:0.7 or lower, and at the same time, 1:1.2 or higher, preferably 1:0.9 or higher.

The polymer mixture useful in the present invention may further comprise silica powder having a sieve particle size of 0.063 mm (250 mesh). The weight ratio of total solids weight of acrylic emulsion (co)polymers to the total weight of silica powder in the polymer mixture useful in the present invention may be from 1:0.5 to 1 :0.001. The weight ratio may be 1:0.04 or lower, preferably 1:0.08 or lower, and at the same time, 1:0.35 or higher, preferably 1:0.25 or higher.

In some embodiments, the polymer mixture useful in the present invention may be obtained by firstly preparing the aqueous binder composition, and then mixing it with the vulcanized or crosslinked rubber and the silica powder. The aqueous binder composition may be supplied in two parts: the first and second acrylic emulsion (co)polymer(s), foaming agent, and optionally additional components such as the rheology modifier and the foam stabilizer usually form "Part A"; and the crosslinking agent comprising the water-dispersible isocyanate composition usually forms "Part B". When used, the epoxy silane may be present in Part A and/or Part B. The polymer mixture useful in the present invention may be prepared by mixing Part A and Part B to form the aqueous binder composition, then mixing with the vulcanized or crosslinked rubber and the silica powder.

Surprisingly, the elastic layer useful in the present invention is capable of fast drying at room temperature, while elastic layers obtained from conventional polymer mixtures, which contains an acrylic latex binder and rubber powder and does not contain the crosslinking agent or the foaming agent, could not thoroughly dry even after 7 days at room temperature. In one lab trial, a 3-mm thick elastic layer made with the polymer mixture useful in the present invention thoroughly dried after 24 hours at 25 to 28°C.

The polymer mixture useful in the present invention may be cured at a temperature of generally 5°C or higher, 10°C or higher, 15°C or higher, or even 20°C or higher, and at the same time, 80°C or lower, 50°C or lower, 40°C or lower, or even 35°C or lower. The time of curing the polymer mixture may be 1 hour or more, 6 hours or more, or even 12 hours or more, and at the same time, 48 hours or less, 36 hours or less, or even 24 hours or less. It is also operable to partially cure the polymer mixture and then complete the curing process at a later time.

The top coat layer is made from an aqueous top coating composition comprising at least one acrylic emulsion (co)polymer. Examples of suitable acrylic emulsion (co)polymers for the top coat layer are as described in the polymer mixture above for the elastic layer. In some embodiments, the aqueous top coating composition may comprise: the first acrylic emulsion (co)polymer having a glass transition temperature of -5°C or less, the second acrylic emulsion (co)polymer having a glass transition temperature of at least 15°C, and the crosslinking agent comprising a water-dispersible isocyanate composition with or without the epoxy silane.

Total amounts of acrylic emulsion (co)polymers in the aqueous top coating composition may be, by solids based on the total solids weight of the aqueous top coating composition, in an amount of 20 wt% or more, 30 wt% or more, or even 40 wt% or more, and at the same time, 95 wt% or less, 85 wt% or less, or even 75 wt% or less.

The concentration of total crosslinking agents in the aqueous top coating composition may be, based on the total solids weight of the acrylic emulsion (co)polymer in the aqueous top coating composition, 1 wt% or more, 4 wt% or more, or even 6 wt% or more, and at the same time, 40 wt% or less, 30 wt% or less, or even 16 wt% or less.

The aqueous top coating composition useful in the present invention may further comprise water. The concentration of the water may be 0 wt% or more, 20 wt% or more, or even 30 wt% or more, and at the same time, 90 wt% or less, 80 wt% or less, or even 70 wt% or less, based on the total weight of the aqueous top coating composition.

The aqueous top coating composition may further comprise the optionally additional components as described for the aqueous binder composition above, except the foaming agent. The aqueous top coating composition may further comprise mar-proof agent, pigment and titanium oxide.

The aqueous top coating composition useful in the present invention may be supplied in two parts: the acrylic emulsion (co)polymer(s) and optionally additional components such as the rheology modifier usually form "Part A"; and the crosslinking agent comprising the water-dispersible isocyanate composition usually forms "Part B". When used, the epoxy silane may be present in Part A and/or Part B. The aqueous top coating composition useful in the present invention is formed by mixing Part A and Part B. The top coat layer may be generally prepared by applying the aqueous top coating composition to the elastic layer, and then drying and curing the aqueous top coating composition to form the top coat layer.

The multilayer coating of the present invention comprises a base layer to further improve the elasticity of the system. The base layer may be a job-site applied layer.

The base layer generally has a thickness in a range of from 5 to 10 mm. The base layer resides between the primer coat layer and the elastic layer. The base layer may be made from a polymer mixture comprising an aqueous binder composition comprising at least one acrylic emulsion (co)polymer and vulcanized or crosslinked rubber.

Examples of suitable aqueous binder compositions for the base layer are as described in the polymer mixture above for the elastic layer. The aqueous binder composition for the base layer comprises: the first acrylic emulsion (co)polymer having a glass transition temperature of -5°C or less, the second acrylic emulsion (co)polymer having a glass transition temperature of at least 15°C, the crosslinking agent comprising a water-dispersible isocyanate composition with or without the epoxy silane.

Total amounts of acrylic emulsion (co)polymers in the aqueous binder composition for the base layer may be, by solids based on the total solids weight of the aqueous binder composition, in an amount of 20 wt% or more, 30 wt% or more, or even 40 wt% or more, and at the same time, 70 wt% or less, 65 wt% or less, or even 60 wt% or less.

The concentration of total crosslinking agents in the aqueous binder composition for the base layer may be, based on the total solids weight of the acrylic emulsion (co)polymer, 2 wt% or more, 4 wt% or more, or even 6 wt% or more, and at the same time, 40 wt% or less, 30 wt% or less, or even 16 wt% or less.

The aqueous binder composition for the base layer may further comprise the optionally additional components as described for the aqueous binder composition in the polymer mixture above for the elastic layer.

The polymer mixture for the base layer comprises vulcanized or crosslinked rubber. Examples of suitable vulcanized or crosslinked rubber in the polymer mixture for the base layer comprise SBR, EPDM rubber, ethylene propylene rubber, butadiene rubber, natural rubber, styrene butadiene copolymer, hydrogenated nitrile, nitrile rubber, neoprene, polychloroprene, ground tire rubber (GTR), waste rubber, waste rubber vulcanizate, or mixtures thereof. Preferably, waste vulcanized or crosslinked rubber is used; such waste rubber may come from any known sources, such as, for example, tires, shoe soles, and ground tire rubber. More preferably, waste tire rubber is used.

The vulcanized or crosslinked rubber in the polymer mixture for the base layer comprises rubber particles having a sieve particle size of 0.5 mm or more, 1 mm or more, or even 2 mm or more, and at the same time, 6 mm or less, 5 mm or less, or even 4 mm or less. In some embodiments, the vulcanized or crosslinked rubber in the polymer mixture for the base layer may further comprise rubber powder having a sieve particle size less than 0.5 millimeter (mm), less than 0.3 mm, less than 0.1 mm, or even less than 0.05 mm.

The weight ratio of total solids weight of acrylic emulsion (co)polymers to the total weight of the vulcanized or crosslinked rubber in the polymer mixture for the base layer is from 1:4 to 1:0.2. The weight ratio may be 1:0.5 or lower, 1: 1 or lower, and at the same time, 1:3 or higher, 1:2 or higher, 1: 1 or higher. The vulcanized or crosslinked rubber in the polymer mixture for the base layer may comprise, based on the total weight of the vulcanized or crosslinked rubber, from 10 to 100 wt%, from 20 to 80 wt%, or from 40 to 60 wt% of the rubber particles; and the rest of the vulcanized or crosslinked rubber are the rubber powder.

The multilayer coating of the present invention may further comprise other functional layers. For example, the multilayer coating may further comprise a strengthening layer, which resides between the elastic layer and the top coat layer. The presence of the strengthening layer may be useful to protect the elastic layer, and further improve elasticity of the multilayer coating.

The strengthening layer may be made from a polymer mixture comprising an aqueous binder composition comprising at least one acrylic emulsion (co)polymer and vulcanized or crosslinked rubber.

Examples of suitable aqueous binder composition for the strengthening layer are as described in the polymer mixture above for the elastic layer. In some embodiments, the aqueous binder composition for the strengthening layer may comprise: the first acrylic emulsion (co)polymer having a glass transition temperature of -5°C or less, the second acrylic emulsion (co)polymer having a glass transition temperature of at least 15°C, and the crosslinking agent comprising a water-dispersible isocyanate composition with or without the epoxy silane.

Total amounts of acrylic emulsion (co)polymers in the aqueous binder composition may be, by solids based on the total solids weight of the aqueous binder composition, in an amount of 20 wt% or more, 30 wt% or more, or even 40 wt% or more, and at the same time, 70 wt% or less, 65 wt% or less, or even 60 wt% or less.

The concentration of total crosslinking agents in the aqueous binder composition may be, based on the total solids weight of the acrylic emulsion (co)polymer, 2 wt% or more, 4 wt% or more, or even 6 wt% or more, and at the same time, 40 wt% or less, 30 wt% or less, or even 16 wt% or less.

The aqueous binder composition for the strengthening layer may further comprise the optionally additional components as described for the aqueous binder composition in the polymer mixture above for the elastic layer, except the foaming agent.

The polymer mixture for the strengthening layer further comprises vulcanized or crosslinked rubber. Examples of suitable vulcanized or crosslinked rubber for the strengthening layer are as described in the polymer mixture above for the elastic layer. The vulcanized or crosslinked rubber in the polymer mixture further comprises rubber powder having a sieve particle size less than 0.25 mm, less than 0.1 mm, or even less than 0.05 mm.

The weight ratio of total solids weight of acrylic emulsion (co)polymers to the total weight of the vulcanized or crosslinked rubber in the polymer mixture of the strengthening layer useful in the present invention may be from 1:1.8 to 1:0.24. The weight ratio may be 1:0.6 or lower, preferably 1:0.84 or lower, and at the same time, 1:1.44 or higher, preferably 1:1.08 or higher.

The polymer mixture for the strengthening layer may further comprise silica powder having a sieve particle size of 0.063 mm (250 mesh). The weight ratio of total solids weight of acrylic emulsion (co)polymers to the total weight of silica powder in the polymer mixture useful in the present invention may be from 1:0.7 to 1:0.001. The weight ratio may be 1:0.2 or lower, preferably 1:0.3 or lower, and at the same time, 1:0.65 or higher, preferably 1:0.6 or higher.

The polymer mixture for the base layer and the strengthening layer may be obtained by the procedure as described above for the elastic layer. In some embodiments, the base layer is a prefabricated rubber mat produced and cured in plant.

The multilayer coating of the present invention achieves a tensile strength of at least 0.5 megapascal (MPa), and an elongation at break of at least 90%, according to the GB/T 19851.11-2005 standard.

The method of preparing the multilayer coating of the present invention may comprise:

(1) providing an aqueous primer composition comprising a styrene-acrylic emulsion (co)polymer;
(2) applying the aqueous primer composition to a substrate;
(3) drying and curing the aqueous primer composition to form a primer coat layer;
(3a) providing a polymer mixture comprising an aqueous binder composition and vulcanized or crosslinked rubber, wherein the aqueous binder composition comprises:

a first acrylic emulsion (co)polymer having a glass transition temperature of -5°C or less;
a second acrylic emulsion (co)polymer having a glass transition temperature of at least 15°C;
a crosslinking agent comprising a water-dispersible isocyanate composition;
a foaming agent;
wherein the vulcanized or crosslinked rubber comprises rubber particles having a sieve particle size of 0.5 to 6 mm; and the weight ratio of the total solids weight of the acrylic emulsion (co)polymer in the aqueous binder composition to the total weight of the vulcanized or crosslinked rubber is from 1:4 to 1:0.2;

(3b) applying the polymer mixture to the primer coat layer to form a base layer, such that the primer coat layer resides between the substrate and the base layer;
(4) providing a polymer mixture comprising an aqueous binder composition and vulcanized or crosslinked rubber, wherein the aqueous binder composition comprises:

a first acrylic emulsion (co)polymer having a glass transition temperature of -5°C or less determined according to the method described herein;
a second acrylic emulsion (co)polymer having a glass transition temperature of at least 15°C determined according to the method described herein;
a crosslinking agent comprising a water-dispersible isocyanate composition;
a foaming agent;
wherein the vulcanized or crosslinked rubber comprises rubber powder having a sieve particle size less than 0.5 mm; and the weight ratio of the total solids weight of the acrylic emulsion (co)polymer to the total weight of the vulcanized or crosslinked rubber is from 1:1.5 to 1:0.2;

(5) applying the polymer mixture to the base layer;
(6) drying and curing the polymer mixture to form an elastic layer, such that the base layer resides between the primer coat layer and the elastic layer;
(7) providing an aqueous top coating composition comprising an acrylic emulsion (co)polymer;
(8) applying the aqueous top coating composition to the elastic layer; and
(9) drying and curing the aqueous top coating composition to form a top coat layer, such that the elastic layer resides between the base layer and the top coat layer. The method of preparing the multilayer coating of the present invention may further comprise: applying the polymer mixture for the elastic layer to the elastic layer to form multiple elastic layers; applying the polymer mixture for the strengthening layer to the elastic layer to form a strengthening layer.

In preparing the multilayer coating, the aqueous primer composition can be applied to a wet substrate or a dry substrate, by any known methods, for example, by rolling. The substrate can be any substrate including, for example, concrete, bitumen, metal, or wood. The polymer mixture for the base layer can be applied to the primer coat layer, by any know methods, for example, manual troweling, machine applying using conventional equipment, or by adhering precast rubber mat onto the primer coat layer. The polymer mixture for the elastic layer can be applied to the primer coat layer or to the base layer, by any known methods, for example, manual troweling. The polymer mixture for the strengthening layer can be applied to the elastic layer, by any known methods, for example, troweling or spraying. The aqueous top coating composition can be applied to the elastic layer or to the strengthening layer, by any known methods, for example, spraying or rolling.

In preparing the multilayer coating, drying and curing the aqueous primer composition, the polymer mixtures or the aqueous top coating composition may be carried out at a predetermined temperature and for a predetermined period of time sufficient to evaporate water. Drying and curing may be conducted at ambient temperature, for example, a temperature of 5°C or higher, 15°C or higher, or even 20°C or higher, and at the same time, 50°C or lower, 40°C or lower, or even 30°C or lower. The time of drying and curing the aqueous primer composition, the polymer mixtures or the aqueous top coating composition may depend on various factors including, for example, thickness of the aqueous primer composition, the polymer mixtures or the aqueous top coating composition applied, and outdoor conditions such as temperature, relative humidity and wind. For example, the time for drying and curing the aqueous primer composition, the polymer mixtures or the aqueous top coating composition may be 1 hour or more, 6 hours or more, or even 12 hours or more, and at the same time, 48 hours or less, 36 hours or less, or even 24 hours or less. The method of preparing the multilayer coating of the present invention can be conducted in an acceptable construction time due to the fast drying speed of the aqueous primer composition, the polymer mixtures and the aqueous top coating composition of the present invention. The time period between the application of the aqueous primer composition to the substrate, the application of the polymer mixtures to the primer coat and the application of the aqueous top coating composition to the elastic layer may be various, for example, the time can be 48 hours or less, 36 hours or less, or even 24 hours or less, and at the same time, 2 hours or more, 2.5 hours or more, or even 3 hours or more.

The obtained multilayer has no volatile organic residues because the multilayer coating uses aqueous compositions in the primer coat layer, the elastic layer(s) and the top coat layer. The method can be conducted at a shorter construction time than a polymer mixture for the elastic layer comprising an acrylic emulsion (co)polymer and rubber powder but without the crosslinking agent or the foaming agent under the same drying conditions.

The multilayer coating of the present invention may be used in various applications, for example, sound proofing materials, acoustic underlayment, flooring underlayment and matting; industrial, sports utilities such as playground surfaces, mats and pads, ball cores, and consumer products such as floor tiles, covers, molded products, and in road paving and maintenance applications. In particular, the multilayer coating is suitable for use as sports court surfaces.

Specifically desirable embodiments of the present invention include a multilayer structure. With reference to Figure 1, there is shown a schematic perspective view of one embodiment of a multilayer coating of the present invention **10** comprising a top coat layer **11,** an elastic layer **12,** a primer coat layer **13,** and optionally one or more other layers. Each of the above-mentioned layers comprises two opposing primary surfaces that may contact one another according to the multilayer coating described above.

In the present invention, the technical features in each preferred technical solution and more preferred technical solution can be combined with each other to form new technical solutions unless indicated otherwise. For briefness, the specification omits the descriptions for these combinations. However, all the technical solutions obtained by combining these technical features should be deemed as being literally described in the present specification in an explicit manner.

In order to further illustrate this invention the following examples are presented. However, it should be understood that the invention is not limited to these illustrative examples.

EXAMPLES

Some embodiments of the invention will now be described in the following Examples, wherein all parts and percentages are by weight unless otherwise specified.

I. RAW MATERIALS

The following materials and abbreviations are used in the examples:

"AA" stands for acrylic acid.

"MAA" stands for methacrylic acid.

"BA" stands for butyl acrylate.

"MMA" stands for methyl meth-acrylate.

"AN" stands for acrylonitrile.

| | Acrylic Polymer Composition (parts relative to one another) | $T_g$ | MFFT | pH value | Solids |
|---|---|---|---|---|---|
| First Polymer latex* | 1AA/11,6AN/83.7BA/3.7Methacrylamide | 20°C | <0°C | 7.5 | 50.5% |
| Second Polymer latex* | 45BA/52MMA/1MAA/2Ureido adhesion promoter | 24°C | 18°C | 9.5 (± 0.5) | 50% |
| *Latexes are all available from The Dow Chemical Company.<br>$T_g$ is determined by the Fox Equation as described above.<br>"MFFT" refers to Minimum Film Formation Temperature and is measured according to ASTM D2354-10. | | | | | |

PRIMAL™ AS-8152N, available from The Dow Chemical Company, is a styrene-acrylic emulsion polymer.

TEGO™ 2290, available from Evonik, is a paraffinic oil type defoamer.

CAPSTONE™ FS-61, available from DuPont, is a fluorosurfactant.

ACRYSOL™ RM-2020NPR, available from The Dow Chemical Company, is a nonionic urethane thickener.

ACRYSOL™ RM-12W thickener, available from The Dow Chemical Company, is a nonionic urethane thickener.

TRITON™ CG-110, available from The Dow Chemical Company, is a foaming agent.

TRITON™ CF-10, available from The Dow Chemical Company, is a wetting agent.

Xianbang C-405 calcium stearate is available from Shanghai Xianbang Chemicals Co. Ltd.

BAYHYDUR™ XP2487/1, available from Bayer Material Science AG, is a hydrophilic aliphatic polyisocyanate based on hexamethylene diisocyanate (HDI), containing hexamethylene-1,6-diisocyanate homopolymer, aliphatic polyisocyanate and isocyanates; and is used as a crosslinking agent.

SILQUEST™ A187 epoxy functional silane, available from Momentive Performance Materials Inc., is gamma-glycidoxypropyltrimethoxy silane and is used as a crosslinking agent.

Silica flour in sieve particle sizes of 0.063 mm (250 mesh), available from Shanghai Science and technology Co. Ltd., is used as inorganic fillers.

EPDM rubber powder in a sieve particle size less than 0.5 mm is available from Fujian Aoxiang Sports Plastic Rubber Co., Ltd.

## II. ANALYTICAL METHODS

The following analytical equipment and methods are used to analyze the inventive and comparative samples.

### Wet Density

The wet density was determined with a 100-millilitre cylinder metal cup according to the GB/T 6750-2007 - Paints and Varnishes - Determination of density - Pyknometer method. The GB/T 6750-2007 standard herein is a national standard published by General Administration of Quality Supervision, Inspection and Quarantine of the P. R. China and Standardization Administration of the P. R. China, issued on September 11, 2007, and put into effect on April 1, 2008.

### Tensile Bond Strength

Tensile bond strength at 24-hour is an indication of the early strength of elastic layer. Higher early strength ensures the elastic layer can be walked on for next step application. The layer sample was cut into 4 centimeters (cm)×4cm square specimens after 16-18 hours. A metal disk was then stuck on the layer sample. The layer sample was cured for 24 hours at 23°C and 50% relative humidity. The tensile bond strength of the elastic layer was tested with a HP 1000 adhesion tester. A tensile bond strength of at least 0.5 MPa is acceptable.

### Tensile strength and elongation at break properties

Tensile strength and elongation at break properties of a sports court sample were evaluated according to item 5.6 of the GB/T 19851.11-2005 standard. If the sample shows a tensile strength of at least 0.5 MPa, it meets the tensile strength requirement of the GB/T 19851.11-2005 standard. Otherwise, it fails the tensile strength requirement. If the sample shows an elongation at break of at least 90%, it meets the elongation at break requirement of the GB/T 19851.11-2005 standard. Otherwise, it fails the elongation at break requirement.

III. SAMPLE PREPARATIONS

1. Comparative Sports Court Example 1

Comparative Sports Court Example 1 is a sports court comprising a primer coat layer, an elastic layer and a top coat layer.

Preparation of Aqueous Primer Composition for Primer Coat Layer

A homogeneous primer composition was made by mixing all components with an IKA mixer at a mixing speed of 300 revolutions per minute (RPM) based on formulations described in TABLE 1.

TABLE 1: Aqueous Primer Composition for Primer Coat Layer

| Materials | Weight Part |
|---|---|
| PRIMAL™ AS-8152N | 50 |
| Water | 50 |
| Total | 100 |

Preparation of Polymer Mixture for Elastic Layer

A polymer mixture was formulated by mixing Part A binder, Part B binder and Part C , based on formulations described in TABLE 2. Part A binder was prepared by homogenously mixing the first polymer latex and second polymer latex, TRITON™ CG-110 as a foaming agent, TRITON™ CF-10 as a wetting agent, Xianbang C-405 calcium stearate, ACRYSOL™ RM-2020NPR as a nonionic urethane thickener, with an IKA mixer at a mixing speed of 300 RPM. Part B was prepared by mixing BAYHYDUR™ XP2487/1 isocyanate crosslinker and SILQUEST™ A187 silane crosslinker. Part C was made by mixing inorganic silica flour and organic EPDM particles.

TABLE 2: Polymer Mixture for Elastic Layer

| Material | | | Weight Part | Weight Ratio* |
|---|---|---|---|---|
| Binder | Part A | First Polymer latex | 78 | 99.5 |
| | | Second Polymer latex | 15 | |
| | | TRITON™ CG-110 | 5 | |
| | | TRITON™ CF-10 | 0.3 | |
| | | Xianbang C-405 | 1 | |
| | | ACRYSOL™ RM-2020NPR | 0.2 | |
| | Part B | BAYHYDUR™ XP2487/1 | 3 | 5 |
| | | SILQUE ST™ A187 | 2 | |
| Part C | Silica flour | Sieve particle size of 0.063 mm (250 mesh) | 4 | 44 |
| | EPDM particles | < 0.5 mm | 40 | |
| *weight ratio refers to the ratio of the total weight of Part A/the total weight of Part B/the total weight of Part C. | | | | |

Part B of the polymer mixture obtained above was gradually added into and mixed with Part A of the polymer mixture obtained above at a mixing speed of 300 RPM for 3 minutes. The blend of Part A and Part B was further mixed at a higher mixing speed of 800 RPM for 3 minutes and then a foamed binder was obtained. Then, Part C of the polymer mixture obtained above were added into and mixed with the resultant foamed binder at a mixing speed of 800 RPM for 3 minutes to obtain a fresh polymer mixture. Wet density was then evaluated according to the test method described above and was reported in TABLE 6.

The aqueous primer composition obtained above was applied to a concrete substrate to form a 200-micron primer coat layer. The polymer mixture obtained above was applied to the primer coat layer to form an elastic layer with 3-mm wet film thickness. Tensile bond strength of the elastic layer sample was then evaluated according to the test method described above and was reported in TABLE 6.

Preparation of Aqueous Top Coating Composition for Top Coat Layer

An aqueous top coating composition was made by mixing all components based on formulations described in TABLE 3.

TABLE 3: Aqueous Top Coating Composition for Top Coat Layer

| Material | | | Weight Part | Weight Ratio* |
|---|---|---|---|---|
| Binder | Part A | First Polymer latex | 27.87 | 100 |
| | | Second Polymer latex | 55.73 | |
| | | TEGO™ 2290 | 0.20 | |
| | | CAPSTONE™ FS-61 | 0.15 | |
| | | ACRYSOL™ RM-12W | 0.14 | |
| | | ACRYSOL™ RM-2020NPR | 0.07 | |
| | | Water | 16.32 | |
| | Part B | BAYHYDUR™ XP 2487/1 | 8 | 8 |
| * weight ratio refers to the ratio of the weight of Part A/the total weight of Part B. | | | | |

Part A of the aqueous top coating composition was homogeneously blended with an IKA mixer at a mixing speed of 300 RPM. Part B of the aqueous top coating composition obtained above was gradually added into and mixed with Part A at a mixing speed of 300 RPM for at least 3 minutes to obtain a homogenous top coating composition.

Preparation of Sports Court Sample

Sports court sample for the tensile strength test and the elongation at break test was prepared as follows. The fresh polymer mixture obtained above was applied into a mold with trowel to form an elastic layer with a thickness of 3 mm. The elastic layer was dried within 1-2 days at room temperature. The aqueous top coating composition was then applied onto the elastic layer to form a top coat layer with a thickness of 200-500 microns. After cured for 24 hours, the obtained sports court samples were cut into dumbbell samples. These dumbbell samples were further exposed to dry condition (7 day at 23°C). Tensile properties of the resultant samples were then evaluated according to the test methods described above and were reported in TABLE 7.

2. Inventive Sports Court Example 2

Inventive Sports Court Example 2 is a sports court comprising a primer coat layer, a base layer, an elastic layer and a top coat layer in accordance to one of the embodiments of the present invention.

Preparation of Aqueous Primer Composition for Primer Coat Layer

Inventive Sports Court Example 2 uses the same aqueous primer composition for primer coat layer as described in Comparative Sports Court Example 1.

Preparation of Polymer Mixture for Elastic Layer

A polymer mixture of the present invention was formulated by mixing Part A binder, Part B binder and Part C, based on formulations described in TABLE 4. Part A binder was prepared by homogenously mixing the first polymer latex and second polymer latex, TRITON™ CG-110 as a foaming agent, TRITON™ CF-10 as a wetting agent, Xianbang C-405 calcium stearate, ACRYSOL™ RM-2020NPR as a nonionic urethane thickener, with an IKA mixer at a mixing speed of 300 RPM. Part B was prepared by mixing BAYHYDUR™ XP2487/1 isocyanate crosslinker and SILQUEST™ A187 silane crosslinker. Part C was made by mixing inorganic silica flour and organic EPDM particles.

TABLE 4: Polymer Mixture for Elastic Layer

| Material | | | Weight Part | Weight Ratio* |
|---|---|---|---|---|
| Binder | Part A | First Polymer latex | 78 | 99.5 |
| | | Second Polymer latex | 15 | |
| | | TRITON™ CG-110 | 5 | |
| | | TRITON™ CF-10 | 0.3 | |
| | | Xianbang C-405 | 1 | |
| | | ACRYSOL™ RM-2020NPR | 0.2 | |
| | Part B | BAYHYDUR™ XP2487/1 | 7 | 7 |
| Part C | Silica flour | Sieve particle size of 0.063 mm (250 mesh) | 4 | 44 |
| | EPDM particles | < 0.5 mm | 40 | |
| *weight ratio refers to the ratio of the total weight of Part A/the total weight of Part B/the total weight of Part C. | | | | |

Part B of the polymer mixture obtained above was gradually added into and mixed with Part A of the polymer mixture obtained above at a mixing speed of 300 RPM for 3 minutes. The blend of Part A and Part B was further mixed at a higher mixing speed of 800 RPM for 1 minute and then a foamed binder was obtained. Then, Part C of the polymer mixture obtained above were added into and mixed with the resultant foamed binder at a mixing speed of 800 RPM for 3 minutes to obtain a fresh polymer mixture. Wet density of the elastic layer sample was then evaluated according to the test method described above and was reported in TABLE 6.

A prefabricated 30cm × 30cm rubber mat serving as a base layer was cut into 4cm × 4cm square blocks. The polymer mixture obtained above was applied to a concrete slab to form an elastic layer with a 3-mm wet film thickness. The cut rubber blocks were then applied to the elastic layer. The layer sample was cured for 24 hours at 23°C and 50% relative humidity. Tensile bond strength of the elastic layer was tested with a HP 1000 adhesion tester and was reported in TABLE 6.

Preparation of Aqueous Top Coating Composition for Top Coat Layer

Inventive Sports Court Example 2 uses the same aqueous top coating composition for top coat layer as described in Inventive Sports Court Example 1.

Preparation of Sports Court Sample

Sports court sample for the tensile strength test and the elongation at break test was prepared as follows. A very thin layer of the fresh polymer mixture was applied to a prefabricated 30cm × 30cm rubber mat serving as a base layer to seal the surface. The fresh polymer mixture was then applied to the thin layer with trowel to form an elastic layer with a thickness of 3mm after the thin layer was dried. The elastic layer was dried within 1-2 days at room temperature. The aqueous top coating composition was then applied onto the elastic layer to form a top coat layer with a thickness of 200-500 microns. After cured for 24 hours, the obtained sports track sample was cut into dumbbell samples. These dumbbell samples were further exposed to dry condition (7 day at 23°C). Tensile properties of the resultant samples were then evaluated according to the test methods described above and were reported in TABLE 7.

3. Comparative Sports Court Example

Comparative Sports Court Example is a sports court comprising an elastic layer and a top coat layer.

Preparation of Polymer Mixture for Elastic Layer

A polymer mixture of the present invention was formulated by mixing Part A binder and Part B, based on formulations described in TABLE 5. Part A binder was prepared by homogenously mixing the first polymer latex and second polymer latex, TRITON™ CG-110 as a foaming agent, TRITON™ CF-10 as a wetting agent, Xianbang C-405 calcium stearate, ACRYSOL™ RM-2020NPR as a nonionic urethane thickener, with an IKA mixer at a mixing speed of 300 RPM. Part B was made by mixing inorganic silica flour and organic EPDM particles.

TABLE 5: Polymer Mixture for Elastic Layer

| Material | | | Weight Part | Weight Ratio* |
|---|---|---|---|---|
| Part A Binder | First Polymer latex | | 78 | 99.5 |
| | Second Polymer latex | | 15 | |
| | TRITON™ CG-110 | | 5 | |
| | TRITON™ CF-10 | | 0.3 | |
| | Xianbang C-405 | | 1 | |
| | ACRYSOL™ RM-2020NPR | | 0.2 | |
| Part B | Silica flour | Sieve particle size of 0.063 mm (250 mesh) | 4 | 44 |
| | EPDM particles | < 0.5 mm | 40 | |
| *weight ratio refers to the ratio of the total weight of Part A/the total weight of Part B. | | | | |

Part B of the polymer mixture obtained above were added into and mixed with Part A binder of the polymer mixture obtained above at a mixing speed of 800 RPM for 3 minutes to obtain a fresh polymer mixture. Wet density of the elastic layer sample was then evaluated according to the test method described above and was reported in TABLE 6.
The polymer mixture obtained above was applied to a concrete substrate to form an elastic layer with 3-mm wet film thickness. Tensile bond strength of the elastic layer sample was then evaluated according to the test method described above and was reported in TABLE 6.

Preparation of Aqueous Top Coating Composition for Top Coat Laver

Comparative Sports Court Example uses the same aqueous top coating composition for top coat layer as described in Comparative Sports Court Example 1.

Preparation of Sports Court Sample

Sports court sample for the tensile strength test and the elongation at break test was prepared as follows. The fresh polymer mixture was applied into a mold with trowel to form an elastic layer with a thickness of 3 mm. The elastic layer was dried within 1-2 days at room temperature. The aqueous top coat layer was then applied onto the elastic layer to form a top coat layer with a thickness of 200-500 microns. After cured for 24 hours, the obtained sports court samples were cut into dumbbell samples. These dumbbell samples were further exposed to dry condition (7 day at 23°C). Tensile properties of the resultant samples were then evaluated according to the test methods described above and were reported in TABLE 7.

IV. ANALYTICAL RESULTS

For purpose of demonstrating the superior properties of the sports court embodying the present invention, three sports court samples with different layers have been prepared and analyzed.
First, a comparison was made between elastic layers prepared using one or more crosslinking agent comprising a water-dispersible isocyanate composition and that prepared without using a crosslinking agent. In particular, the elastic layers of Comparative Sports Court Example 1 and Inventive Sports Court Example 2 were made with a crosslinking agent comprising a water-dispersible isocyanate composition; whereas Comparative Sports Court Example was made without a crosslinking agent. TABLE 6 below summaries the evaluation of the elastic layer samples. As TABLE 6 illustrates, all elastic layer samples of the inventive sports court examples meet the performance requirement, i.e., wet density (<1.0 gram per milliliter (g/ml)) and high tensile bond strength (>0.5MPa), which shows and exhibit good dry speed and bond strength.

TABLE 6: Comparison of Drying Time and Bond Strength

| Elastic Layer | Wet density (g/ml) | Tensile bond strength* (MPa) |
|---|---|---|
| Comparative Sports Court Example 1 | 0.85 | 0.54 |
| Comparative Sports Court Example | 1.15 | wet between the elastic layer and the substrate; easy to tear off |
| Inventive Sports Court Example 2 | 0.95 | 0.55 |
| * Tensile bond strength after 1 day at 23°C and .50% relative humidity | | |

Second, a comparison was made between Comparative Sports Court Example 1 and Inventive Sports Court Example 2 and the requirement of the GB/T 19851.11-2005 standard. TABLE 7 below summaries the evaluation of the sports court samples under a dry condition. As shown in Table 7, Comparative Sports Court Example 1 showed a tensile strength of at least 0.98 MPa and an elongation at break of 303%; while Inventive Sports Court Example 2 showed a tensile strength of at least 1.20 MPa and an elongation at break of 173%. Thus, both meet the tensile strength and the elongation at break requirements of the GB/T 19851.11-2005 standard.

TABLE 7: Comparison of Tensile Strength and Elongation at Break

| Sports Court | Tensile strength (MPa) | Elongation at break (%) |
|---|---|---|
| Comparative Sports Court Example 1 | 0.98 | 303 |
| Comparative Sports Court Example | N/A | N/A |
| Inventive Sports Court Example 2 | 1.20 | 173 |
| GB/T 19851.11-2005 | ≥0.5 | ≥90 |
| * Dry condition: 7 days at 23°C and 50% relative humidity | | |

**Claims**

1.  A multilayer coating (10) comprising:

    (i) a primer coat layer (13) comprising an aqueous primer composition comprising a styrene-acrylic emulsion (co)polymer;
    (ii) a base layer comprising a polymer mixture comprising an aqueous binder composition and vulcanized or crosslinked rubber, wherein the aqueous binder composition comprises:

       a first acrylic emulsion (co)polymer having a glass transition temperature of - 5°C or less determined according to the method described in the description;
       a second acrylic emulsion (co)polymer having a glass transition temperature of at least 15°C determined according to the method described in the description;
       a crosslinking agent comprising a water-dispersible isocyanate composition;
       a foaming agent;

    wherein the vulcanized or crosslinked rubber comprises rubber particles having a sieve particle size of 0.5 to 6 mm; and the weight ratio of the total solids weight of the acrylic emulsion (co)polymers to the total weight of the vulcanized or crosslinked rubber in the polymer mixture is from 1:4 to 1:0.2;
    (iii) one or more elastic layer (12) comprising a polymer mixture comprising an aqueous binder composition and vulcanized or crosslinked rubber, wherein the aqueous binder composition comprises:

       a first acrylic emulsion (co)polymer having a glass transition temperature of - 5°C or less determined according to the method described in the description;
       a second acrylic emulsion (co)polymer having a glass transition temperature of at least 15°C determined according to the method described in the description;

a crosslinking agent comprising a water-dispersible isocyanate composition;
a foaming agent;

wherein the vulcanized or crosslinked rubber comprises rubber powder having a sieve particle size less than 0.5 mm; and the weight ratio of the total solids weight of the acrylic emulsion (co)polymers to the total weight of the vulcanized or crosslinked rubber in the polymer mixture is from 1:1.5 to 1:0.2; and
(iv) a top coat layer (11) comprising an aqueous top coating composition comprising an acrylic emulsion (co)polymer.

2. The multilayer coating (10) of claim 1, wherein the crosslinking agent in the one or more elastic layer(s) further comprises an epoxy silane.

3. The multilayer coating (10) of claim 1, wherein the crosslinking agent in the one or more elastic layer(s) is present in an amount of from 2 to 40 wt%, based on the total solids weight of the acrylic emulsion (co)polymer.

4. The multilayer coating (10) of claim 1, wherein the foaming agent in the one or more elastic layer(s) is selected from sodium oleate, sodium alkylsulfonate, sodium alkylbenzenesulfonate, alkyl polyglycoside, or mixtures thereof.

5. The multilayer coating (10) of any one of claims 1-4, wherein the aqueous binder composition in the one or more elastic layer(s) comprises, based on the total solids weight of the acrylic emulsion (co)polymer, from 5 to 95 wt% of a first acrylic emulsion (co)polymer, and from 5 to 95 wt% of a second acrylic emulsion (co)polymer.

6. The multilayer coating (10) of any one of claims 1-4, wherein the first acrylic emulsion (co)polymer and the second acrylic emulsion (co)polymer in the one or more elastic layer(s) each comprises as polymerized units, at least one ethylenically unsaturated nonionic monomer, and at least one ethylenically unsaturated monomer having at least one functional group selected from carbonyl, acetoacetate, alkoxysilane, carboxyl, ureido, amide, imide or amino group, or mixtures thereof.

7. The multilayer coating (10) of any one of claims 1-4, wherein the polymer mixture in the one or more elastic layer(s) further comprises silica powder having a sieve particle size of 0.063 mm (250 mesh).

8. The multilayer coating (10) of any one of claims 1-4, wherein the aqueous binder composition in the one or more elastic layer(s) further comprises a silicone dispersion.

9. The multilayer coating of claim 1, wherein the vulcanized or crosslinked rubber in the base layer further comprises rubber powder having a sieve particle size less than 0.5 mm.

10. The multilayer coating (10) of any one of claims 1-4, wherein the multilayer coating (10) further comprises a strengthening layer comprising a polymer mixture comprising an aqueous binder composition and vulcanized or crosslinked rubber, wherein the aqueous binder composition comprises:

(i) a first acrylic emulsion (co)polymer having a glass transition temperature of -5°C or less determined according to the method described the description;
(ii) a second acrylic emulsion (co)polymer having a glass transition temperature of at least 15°C determined according to the method described in the description; and
(iii) a crosslinking agent comprising a water-dispersible isocyanate composition; and

wherein the vulcanized or crosslinked rubber comprises rubber powder having a sieve particle size less than 0.25 mm; and the weight ratio of the total solids weight of the acrylic emulsion (co)polymer to the total weight of the vulcanized or crosslinked rubber is from 1: 1.8 to 1:0.24.

11. The multilayer coating (10) of claim 10, wherein the polymer mixture of the strengthening layer further comprises silica powder having a sieve particle size of 0.063 mm (250 mesh).

12. A method of preparing the multilayer coating (10) of any one of claims 1-4, comprising:

(1) providing an aqueous primer composition comprising a styrene-acrylic emulsion (co)polymer;
(2) applying the aqueous primer composition to a substrate;

(3) drying and curing the aqueous primer composition to form a primer coat layer (13);

(3a) providing a polymer mixture comprising an aqueous binder composition and vulcanized or crosslinked rubber, wherein the aqueous binder composition comprises:

a first acrylic emulsion (co)polymer having a glass transition temperature of -5°C or less; determined according to the method of the description;

a second acrylic emulsion (co)polymer having a glass transition temperature of at least 15°C; determined according to the method of the description;

a crosslinking agent comprising a water-dispersible isocyanate composition;

a foaming agent;

wherein the vulcanized or crosslinked rubber comprises rubber particles having a sieve particle size of 0.5 to 6 mm; and the weight ratio of the total solids weight of the acrylic emulsion (co)polymer in the aqueous binder composition to the total weight of the vulcanized or crosslinked rubber is from 1:4 to 1:0.2;

(3b) applying the polymer mixture to the primer coat layer (13) to form a base layer, such that the primer coat layer (13) resides between the substrate and the base layer;

(4) providing a polymer mixture comprising an aqueous binder composition and vulcanized or crosslinked rubber, wherein the aqueous binder composition comprises:

a first acrylic emulsion (co)polymer having a glass transition temperature of -5°C or less determined according to the method described in the description;

a second acrylic emulsion (co)polymer having a glass transition temperature of at least 15°C determined according to the method described in the description;

a crosslinking agent comprising a water-dispersible isocyanate composition;

a foaming agent;

wherein the vulcanized or crosslinked rubber comprises rubber powder having a sieve particle size less than 0.5 mm; and the weight ratio of the total solids weight of the acrylic emulsion (co)polymer to the total weight of the vulcanized or crosslinked rubber is from 1:1.5 to 1:0.2;

(5) applying the polymer mixture to the base layer;

(6) drying and curing the polymer mixture to form an elastic layer (12), such that the base layer resides between the primer coat layer (13) and the elastic layer (12);

(7) providing an aqueous top coating composition comprising an acrylic emulsion (co)polymer;

(8) applying the aqueous top coating composition to the elastic layer (12); and

(9) drying and curing the aqueous top coating composition to form a top coat layer (11), such that the elastic layer (12) resides between the base layer and the top coat layer (11).

**Patentansprüche**

1. Mehrschichtige Beschichtung (10), umfassend:

(i) eine Primerbeschichtungsschicht (13), umfassend eine wässrige Primerzusammensetzung, umfassend ein Styrol-Acrylemulsions(co)polymer;

(ii) eine Basisschicht, umfassend eine Polymermischung, umfassend eine wässrige Bindemittelzusammensetzung und vulkanisierten oder vernetzten Kautschuk, wobei die wässrige Bindemittelzusammensetzung umfasst:

ein erstes Acrylemulsions(co)polymer, das eine Glasübergangstemperatur von -5 °C oder weniger aufweist, bestimmt gemäß dem in der Beschreibung beschriebenen Verfahren;

ein zweites Acrylemulsions(co)polymer, das eine Glasübergangstemperatur von mindestens 15 °C aufweist, bestimmt gemäß dem in der Beschreibung beschriebenen Verfahren;

ein Vernetzungsmittel, umfassend eine wasserdispergierbare Isocyanatzusammensetzung;

ein Schaummittel;

wobei der vulkanisierte oder vernetzte Kautschuk Kautschukpartikel umfasst, die eine Siebpartikelgröße von 0,5 bis 6 mm aufweisen; und das Gewichtsverhältnis des Gesamtfeststoffgewichts der Acrylemulsions(co)polymere zu dem Gesamtgewicht des vulkanisierten oder vernetzten Kautschuks in der Polymermischung von 1 : 4 bis 1 : 0,2 beträgt;

(iii) eine oder mehrere elastische Schichten (12), umfassend eine Polymermischung, umfassend eine wässrige Bindemittelzusammensetzung und vulkanisierten oder vernetzten Kautschuk, wobei die wässrige Bindemittelzusammensetzung umfasst:

ein erstes Acrylemulsions(co)polymer, das eine Glasübergangstemperatur von -5 °C oder weniger aufweist, bestimmt gemäß dem in der Beschreibung beschriebenen Verfahren;
ein zweites Acrylemulsions(co)polymer, das eine Glasübergangstemperatur von mindestens 15 °C aufweist, bestimmt gemäß dem in der Beschreibung beschriebenen Verfahren;
ein Vernetzungsmittel, umfassend eine wasserdispergierbare Isocyanatzusammensetzung; ein Schaummittel;
wobei der vulkanisierte oder vernetzte Kautschuk Kautschukpulver umfasst, das eine Siebpartikelgröße von weniger als 0,5 mm aufweist; und das Gewichtsverhältnis des Gesamtfeststoffgewichts der Acrylemulsions(co)polymere zu dem Gesamtgewicht des vulkanisierten oder vernetzten Kautschuks in der Polymermischung von 1 : 1,5 bis 1 : 0,2 beträgt; und

(iv) eine obere Beschichtungsschicht (11), umfassend eine wässrige obere Beschichtungszusammensetzung, umfassend ein Acrylemulsions(co)polymer.

2. Mehrschichtige Beschichtung (10) nach Anspruch 1, wobei das Vernetzungsmittel in der einen oder den mehreren elastischen Schichten ferner ein Epoxysilan umfasst.

3. Mehrschichtige Beschichtung (10) nach Anspruch 1, wobei das Vernetzungsmittel in der einen oder den mehreren elastischen Schichten in einer Menge zu 2 bis 40 Gew.-%, basierend auf dem Gesamtfeststoffgewicht des Acrylemulsions(co)polymers, vorhanden ist.

4. Mehrschichtige Beschichtung (10) nach Anspruch 1, wobei das Schaummittel in der einen oder den mehreren elastischen Schichten aus Natriumoleat, Natriumalkylsulfonat, Natriumalkylbenzolsulfonat, Alkylpolyglycosid oder Mischungen davon ausgewählt ist.

5. Mehrschichtige Beschichtung (10) nach einem der Ansprüche 1 bis 4, wobei die wässrige Bindemittelzusammensetzung in der einen oder den mehreren elastischen Schichten, basierend auf dem Gesamtfeststoffgewicht des Acrylemulsions(co)polymers, zu 5 bis 95 Gew.-% ein erstes Acrylemulsions(co)polymer und zu 5 bis 95 Gew.-% ein zweites Acrylemulsions(co)polymer umfasst.

6. Mehrschichtige Beschichtung (10) nach einem der Ansprüche 1 bis 4, wobei das erste Acrylemulsions(co)polymer und das zweite Acrylemulsions(co)polymer in der einen oder den mehreren elastischen Schichten jeweils als polymerisierte Einheiten mindestens ein ethylenisch ungesättigtes nichtionisches Monomer und mindestens ein ethylenisch ungesättigtes Monomer, das mindestens eine funktionelle Gruppe aufweist, die aus Carbonyl, Acetoacetat, Alkoxysilan, Carboxyl, Ureido, Amid, Imid oder Aminogruppe oder Mischungen davon ausgewählt ist, umfasst.

7. Mehrschichtige Beschichtung (10) nach einem der Ansprüche 1 bis 4, wobei die Polymermischung in der einen oder den mehreren elastischen Schichten ferner Siliciumdioxid-Pulver umfasst, das eine Siebpartikelgröße von 0,063 mm (250 Mesh) aufweist.

8. Mehrschichtige Beschichtung (10) nach einem der Ansprüche 1 bis 4, wobei die wässrige Bindemittelzusammensetzung in der einen oder den mehreren elastischen Schichten ferner eine Silikondispersion umfasst.

9. Mehrschichtige Beschichtung nach Anspruch 1, wobei der vulkanisierte oder vernetzte Kautschuk in der Basisschicht ferner Kautschukpulver umfasst, das eine Siebpartikelgröße von weniger als 0,5 mm aufweist.

10. Mehrschichtige Beschichtung (10) nach einem der Ansprüche 1 bis 4, wobei die mehrschichtige Beschichtung (10) ferner eine Verstärkungsschicht umfasst, umfassend eine Polymermischung, umfassend eine wässrige Bindemittelzusammensetzung und vulkanisierten oder vernetzten Kautschuk, wobei die wässrige Bindemittelzusammensetzung umfasst:

(i) ein erstes Acrylemulsions(co)polymer, das eine Glasübergangstemperatur von -5 °C oder weniger aufweist, bestimmt gemäß dem in der Beschreibung beschriebenen Verfahren;
(ii) ein zweites Acrylemulsions(co)polymer, das eine Glasübergangstemperatur von mindestens 15 °C aufweist, bestimmt gemäß dem in der Beschreibung beschriebenen Verfahren; und

(iii) ein Vernetzungsmittel, umfassend eine wasserdispergierbare Isocyanatzusammensetzung; und wobei der vulkanisierte oder vernetzte Kautschuk Kautschukpulver umfasst, das eine Siebpartikelgröße von weniger als 0,25 mm aufweist; und das Gewichtsverhältnis des Gesamtfeststoffgewichts des Acrylemulsions(co)polymers zu dem Gesamtgewicht des vulkanisierten oder vernetzten Kautschuks von 1 : 1,8 bis 1 : 0,24 beträgt.

11. Mehrschichtige Beschichtung (10) nach Anspruch 10, wobei die Polymermischung der Verstärkungsschicht ferner Siliciumdioxid-Pulver umfasst, das eine Siebpartikelgröße von 0,063 mm (250 Mesh) aufweist.

12. Verfahren zum Herstellen der mehrschichtigen Beschichtung (10) nach einem der Ansprüche 1 bis 4, umfassend:

(1) Bereitstellen einer wässrigen Primerzusammensetzung, umfassend ein Styrol-Acrylemulsions(co)polymer;
(2) Aufbringen der flüssigen Primerzusammensetzung auf ein Substrat;
(3) Trocknen und Härten der wässrigen Primerzusammensetzung, um eine Primerbeschichtungsschicht (13) auszubilden;
(3a) Bereitstellen einer Polymermischung, umfassend eine wässrige Bindemittelzusammensetzung und vulkanisierten oder vernetzten Kautschuk, wobei die wässrige Bindemittelzusammensetzung umfasst:

ein erstes Acrylemulsions(co)polymer, das eine Glasübergangstemperatur von -5 °C oder weniger aufweist; bestimmt gemäß dem Verfahren der Beschreibung;
ein zweites Acrylemulsions(co)polymer, das eine Glasübergangstemperatur von mindestens 15 °C aufweist; bestimmt gemäß dem Verfahren der Beschreibung;
ein Vernetzungsmittel, umfassend eine wasserdispergierbare Isocyanatzusammensetzung;
ein Schaummittel;
wobei der vulkanisierte oder vernetzte Kautschuk Kautschukpartikel umfasst, die eine Siebpartikelgröße von 0,5 bis 6 mm aufweisen; und das Gewichtsverhältnis des Gesamtfeststoffgewichts des Acrylemulsions(co)polymers in der wässrigen Bindemittelzusammensetzung zu dem Gesamtgewicht des vulkanisierten oder vernetzten Kautschuks von 1 : 4 bis 1 : 0,2 beträgt;

(3b) Aufbringen der Polymermischung auf die Primerbeschichtungsschicht (13), um eine Basisschicht derart auszubilden, dass sich die Primerbeschichtungsschicht (13) zwischen dem Substrat und der Basisschicht befindet;
(4) Bereitstellen einer Polymermischung, umfassend eine wässrige Bindemittelzusammensetzung und vulkanisierten oder vernetzten Kautschuk, wobei die wässrige Bindemittelzusammensetzung umfasst:

ein erstes Acrylemulsions(co)polymer, das eine Glasübergangstemperatur von -5 °C oder weniger aufweist, bestimmt gemäß dem in der Beschreibung beschriebenen Verfahren;
ein zweites Acrylemulsions(co)polymer, das eine Glasübergangstemperatur von mindestens 15 °C aufweist, bestimmt gemäß dem in der Beschreibung beschriebenen Verfahren;
ein Vernetzungsmittel, umfassend eine wasserdispergierbare Isocyanatzusammensetzung;
ein Schaummittel;
wobei der vulkanisierte oder vernetzte Kautschuk Kautschukpulver umfasst, das eine Siebpartikelgröße von weniger als 0,5 mm aufweist; und das Gewichtsverhältnis des Gesamtfeststoffgewichts des Acrylemulsions(co)polymers zu dem Gesamtgewicht des vulkanisierten oder vernetzten Kautschuks von 1 : 1,5 bis 1 : 0,2 beträgt;

(5) Aufbringen der Polymermischung auf die Basisschicht;
(6) Trocknen und Härten der Polymermischung, um eine elastische Schicht (12) derart auszubilden, dass sich die Basisschicht zwischen der Primerbeschichtungsschicht (13) und der elastischen Schicht (12) befindet;
(7) Bereitstellen einer wässrigen oberen Beschichtungszusammensetzung, umfassend ein Acrylemulsions(co)polymer;
(8) Aufbringen der wässrigen oberen Beschichtungszusammensetzung auf die elastische Schicht (12); und
(9) Trocknen und Härten der wässrigen oberen Beschichtungszusammensetzung, um eine obere Beschichtungsschicht (11) derart auszubilden, dass sich die elastische Schicht (12) zwischen der Basisschicht und der oberen Beschichtungsschicht (11) befindet.

**Revendications**

1. Revêtement multicouche (10) comprenant :

    (i) une couche de revêtement d'apprêt (13) comprenant une composition d'apprêt aqueuse comprenant un (co)polymère en émulsion styrène-acrylique ;
    (ii) une couche de base comprenant un mélange polymère comprenant une composition aqueuse de liant et du caoutchouc vulcanisé ou réticulé, la composition aqueuse de liant comprenant :

        un premier (co)polymère en émulsion acrylique ayant une température de transition vitreuse de -5 °C ou moins déterminée selon le procédé décrit dans la description ;
        un second (co)polymère en émulsion acrylique ayant une température de transition vitreuse d'au moins 15 °C déterminée selon le procédé décrit dans la description ;
        un agent de réticulation comprenant une composition d'isocyanate hydrodispersible ;
        un agent moussant ;
        dans lequel le caoutchouc vulcanisé ou réticulé comprend des particules de caoutchouc ayant une taille de particules au tamis de 0,5 à 6 mm ; et le rapport pondéral du poids de solides totaux des (co)polymères en émulsion acryliques au poids total du caoutchouc vulcanisé ou réticulé dans le mélange polymère va de 1:4 à 1:0,2 ;

    (iii) une couche élastique (12) ou plus comprenant un mélange polymère comprenant une composition aqueuse de liant et du caoutchouc vulcanisé ou réticulé, la composition aqueuse de liant comprenant :

        un premier (co)polymère en émulsion acrylique ayant une température de transition vitreuse de -5 °C ou moins déterminée selon le procédé décrit dans la description ;
        un second (co)polymère en émulsion acrylique ayant une température de transition vitreuse d'au moins 15 °C déterminée selon le procédé décrit dans la description ;
        un agent de réticulation comprenant une composition d'isocyanate hydrodispersible ; un agent moussant ;
        dans lequel le caoutchouc vulcanisé ou réticulé comprend de la poudre de caoutchouc ayant une taille de particules au tamis inférieure à 0,5 mm ; et le rapport pondéral du poids de solides totaux des (co)polymères en émulsion acryliques au poids total du caoutchouc vulcanisé ou réticulé dans le mélange polymère va de 1:1,5 à 1:0,2 ; et

    (iv) une couche de revêtement supérieur (11) comprenant une composition aqueuse de revêtement supérieur comprenant un (co)polymère en émulsion acrylique.

2. Revêtement multicouche (10) selon la revendication 1, dans lequel l'agent de réticulation dans la ou les couche(s) élastique(s) comprend en outre un époxysilane.

3. Revêtement multicouche (10) selon la revendication 1, dans lequel l'agent de réticulation dans la ou les couche(s) élastique(s) est présent en une quantité allant de 2 à 40 % en poids, en fonction du poids de solides totaux du (co)polymère en émulsion acrylique.

4. Revêtement multicouche (10) selon la revendication 1, dans lequel l'agent moussant dans la ou les couche(s) élastique(s) est choisi parmi oléate de sodium, alkylsulfonate de sodium, alkylbenzènesulfonate de sodium, alkyl-polyglycoside, ou mélanges de ceux-ci.

5. Revêtement multicouche (10) selon l'une quelconque des revendications 1 à 4, dans lequel la composition aqueuse de liant dans la ou les couche(s) élastique(s) comprend, en fonction du poids de solides totaux du (co)polymère en émulsion acrylique, de 5 à 95 % en poids d'un premier (co)polymère en émulsion acrylique, et de 5 à 95 % en poids d'un second (co)polymère en émulsion acrylique.

6. Revêtement multicouche (10) selon l'une quelconque des revendications 1 à 4, dans lequel le premier (co)polymère en émulsion acrylique et le second (co)polymère en émulsion acrylique dans la ou les couche(s) élastique(s) comprennent chacun en guise de motifs polymérisés, au moins un monomère non ionique à insaturation éthylénique, et au moins un monomère à insaturation éthylénique ayant au moins un groupe fonctionnel choisi parmi un groupe carbonyle, acétoacétate, alcoxysilane, carboxyle, uréido, amide, imide ou amino, ou des mélanges de ceux-ci.

7. Revêtement multicouche (10) selon l'une quelconque des revendications 1 à 4, dans lequel le mélange polymère dans la ou les couche(s) élastique(s) comprend en outre de la poudre de silice ayant une taille de particules au tamis de 0,063 mm (250 mesh).

8. Revêtement multicouche (10) selon l'une quelconque des revendications 1 à 4, dans lequel la composition aqueuse de liant dans la ou les couche(s) élastique(s) comprend en outre une dispersion de silicone.

9. Revêtement multicouche selon la revendication 1, dans lequel le caoutchouc vulcanisé ou réticulé dans la couche de base comprend en outre de la poudre de caoutchouc ayant une taille de particules au tamis inférieure à 0,5 mm.

10. Revêtement multicouche (10) selon l'une quelconque des revendications 1 à 4, le revêtement multicouche (10) comprenant en outre une couche de renforcement comprenant un mélange polymère comprenant une composition aqueuse de liant et du caoutchouc vulcanisé ou réticulé, la composition aqueuse de liant comprenant :

> (i) un premier (co)polymère en émulsion acrylique ayant une température de transition vitreuse de -5 °C ou moins déterminée selon le procédé décrit dans la description ;
> (ii) un second (co)polymère en émulsion acrylique ayant une température de transition vitreuse d'au moins 15 °C déterminée selon le procédé décrit dans la description ; et
> (iii) un agent de réticulation comprenant une composition d'isocyanate hydrodispersible ; et dans lequel le caoutchouc vulcanisé ou réticulé comprend de la poudre de caoutchouc ayant une taille de particules au tamis inférieure à 0,25 mm ; et le rapport pondéral du poids de solides totaux du (co)polymère en émulsion acrylique au poids total du caoutchouc vulcanisé ou réticulé va de 1:1,8 à 1:0,24.

11. Revêtement multicouche (10) selon la revendication 10, dans lequel le mélange polymère de la couche de renforcement comprend en outre de la poudre de silice ayant une taille de particules au tamis de 0,063 mm (250 mesh).

12. Procédé de préparation du revêtement multicouche (10) selon l'une quelconque des revendications 1 à 4, comprenant :

> (1) la fourniture d'une composition d'apprêt aqueuse comprenant un (co)polymère en émulsion styrène-acrylique ;
> (2) l'application de la composition d'apprêt aqueuse à un substrat ;
> (3) le séchage et le durcissement de la composition d'apprêt aqueuse pour former une couche de revêtement d'apprêt (13) ;
> (3a) la fourniture d'un mélange polymère comprenant une composition aqueuse de liant et du caoutchouc vulcanisé ou réticulé, la composition aqueuse de liant comprenant :
>
> > un premier (co)polymère en émulsion acrylique ayant une température de transition vitreuse de -5 °C ou moins ; déterminée selon le procédé de la description ;
> > un second (co)polymère en émulsion acrylique ayant une température de transition vitreuse d'au moins 15 °C déterminée selon le procédé de la description ;
> > un agent de réticulation comprenant une composition d'isocyanate hydrodispersible ;
> > un agent moussant ;
> > dans lequel le caoutchouc vulcanisé ou réticulé comprend des particules de caoutchouc ayant une taille de particules au tamis de 0,5 à 6 mm ; et le rapport pondéral du poids de solides totaux du (co)polymère en émulsion acrylique dans la composition aqueuse de liant au poids total du caoutchouc vulcanisé ou réticulé va de 1:4 à 1:0,2 ;
>
> (3b) l'application du mélange polymère à la couche de revêtement d'apprêt (13) pour former une couche de base, de telle sorte que la couche de revêtement d'apprêt (13) se trouve entre le substrat et la couche de base ;
> (4) la fourniture d'un mélange polymère comprenant une composition aqueuse de liant et du caoutchouc vulcanisé ou réticulé, la composition aqueuse de liant comprenant :
>
> > un premier (co)polymère en émulsion acrylique ayant une température de transition vitreuse de -5 °C ou moins déterminée selon le procédé décrit dans la description ;
> > un second (co)polymère en émulsion acrylique ayant une température de transition vitreuse d'au moins 15 °C déterminée selon le procédé décrit dans la description ;
> > un agent de réticulation comprenant une composition d'isocyanate hydrodispersible ;

un agent moussant ;

dans lequel le caoutchouc vulcanisé ou réticulé comprend de la poudre de caoutchouc ayant une taille de particules au tamis inférieure à 0,5 mm ; et le rapport pondéral du poids de solides totaux du (co)polymère en émulsion acrylique au poids total du caoutchouc vulcanisé ou réticulé va de 1:1,5 à 1:0,2 ;

(5) l'application du mélange polymère à la couche de base ;

(6) le séchage et le durcissement du mélange polymère pour former une couche élastique (12), de telle sorte que la couche de base se trouve entre la couche de revêtement d'apprêt (13) et la couche élastique (12) ;

(7) la fourniture d'une composition aqueuse de revêtement supérieur comprenant un (co)polymère en émulsion acrylique ;

(8) l'application de la composition aqueuse de revêtement supérieur à la couche élastique (12) ; et

(9) le séchage et le durcissement de la composition aqueuse de revêtement supérieur pour former une couche de revêtement supérieur (11), de telle sorte que la couche élastique (12) se trouve entre la couche de base et la couche de revêtement supérieur (11).

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015051526 A

**Non-patent literature cited in the description**

- **T.G. FOX.** *Bulletin of the American Physical Society,* 1956, vol. 1 (3), 123

- **J. BRANDRUP ; E.H. IMMERGUT ; E.A. GRULKE.** Polymer Handbook. Interscience Publishers, 1999